# EUROPEAN PATENT APPLICATION

(11) **EP 0 615 377 A2**
(43) Date of publication of application: **14.09.1994**
(21) Application number: 94103302.9
(22) Date of filing: 04.03.1994
(51) Int. Cl.: H04N 1/32

(54) **An Automatic facsimile delivery system**

(30) Priority: 10.03.1993 FI 931053
(71) Applicant: TECNOMEN OY, SF-02110 Espoo (FI)
(72) Inventor: Pasonen,Kari, FIN-02110 Espoo (FI); Ellonen,Timo, 00690 Helsinki (FI); Penttonen,Jyrki, FIN-00120 Helsinki (FI)
(74) Representative: Fleuchaus, Leo, Dipl.-Ing.

(57) **Abstract**

Currently arranging a reliable delivery for facsimile messages is a problem in local area network environment because further deliveries are not possible when facsimile messages have been received and thus manual interventions are required to make sure that the facsimile message reaches it's intended recipient. The invention subject to this patent provides a way of accomplishing an automatic facsimile delivery in a local area network environment.

The Originator of the Facsimile (OF) sends a Facsimile Message (FM)to a predefined Telephone Number (TN). This Telephone Number (TN) belongs to a set of numbers which are located in a Facsimile Delivery System (FDS). The Facsimile Delivery System (FDS), which is connected to Switched Telephone Network (STN), then receives the Facsimile Message (FM) and after having received and stored the Facsimile Message (FM) the Facsimile Delivery System (FDS) forwards the same Facsimile Message (FM) together with the Telephone Number (TN) to the Local Area Network Server (LANS). The Local Area Network Server (LANS) extracts the Telephone Number (TN) from the Facsimile Message (FM) and forwards the Facsimile Message (FM) to the Intended Recipient (IR) by means of an Electronic Mail System (EMS).

## Description

Facsimile communication is a necessity in business today and facsimile has been accepted as an important tool by all businesses because it provides a quick and reliable way to get the message accross.

Together with the proliferation of facsimile messaging a rapid increase in the number of local area network installations has been experienced. Thus a workstation of some kind can be found from almost any desk and local area networks linking thousands of them are in place making it possible for people to share information. Communication within a group of people having access to workstations within a network is quick and easy: electronic mail systems make a good backbone for efficient communication. Workstation to workstation, or people to people, communication can be easily accomplished by means of the wide variety of electronic mail systems available on the market today.

Recent trend has been to replace existing facsimile machines with an electronic facsimile board attached to a server within a local area network. The facsimile board can serve for a gateway to the workstations within the network. A facsimile message originated by a workstation user can be transferred to the facsimile board to be forwarded to the intended destination facsimile machine. Electronic mail systems can be utilized to make those transfers taking place conveniently and transparently for the user and thus the scheme works excellently as far as outgoing faxes are concerned.

Typically the electronic facsimile boards available for local area network servers have capability for receiving facsimile messages in addition to being able to send them. However, the delivery of the received facsimile can not usually be arranged in a straightforward manner as it is necessary that a human operator will read the name located in the message cover sheet in order to decide who is the intended recipient. A lot of efforts have been put to design various different types of devices and software modules which could somehow intercept and decode the names in the first few pages in the facsimile, but due to the fact that facsimiles can be received from hundreds if not thousands originators it is almost impossible to devise any general purpose methodologies to accomplish the said task. Therefore this identification of intended recipients of incoming facsimile messages is an issue which has seriously slowed down the proliferation of local area network and facsimile integration. The invention subject to this patent addresses this problem in an efficient manner providing a general purpose solution.

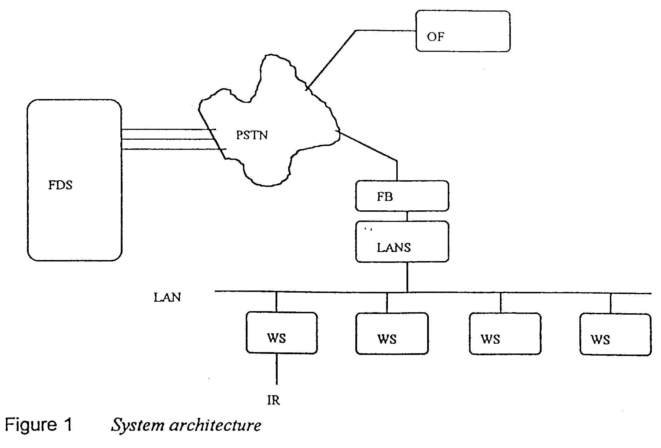

The core of the solution to the incoming facsimile delivery problem is the introduction of Facsimile Delivery System (FDS). This unit is connected to Switched Telephone Network and it is capable of receiving, storing and sending facsimile messages. The basic architecture for a system that enables the use of the methods presented in this patent application is described below with reference to the enclosed drawings, wherein
Figure 1 shows a system architecture;

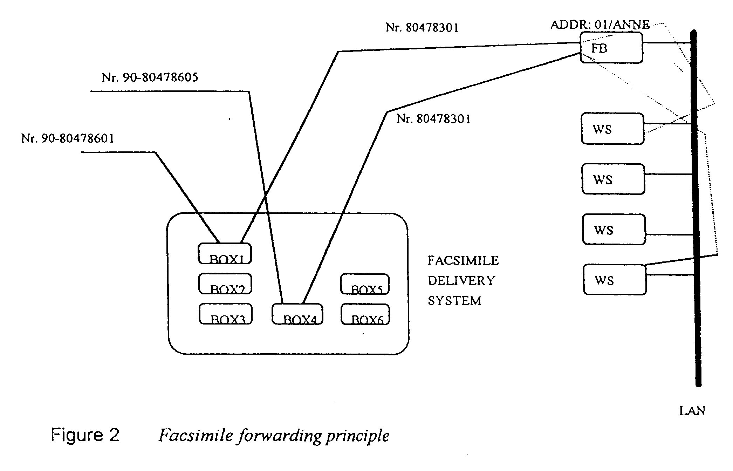

Figure 2 shows a facsimile forwarding principle; and

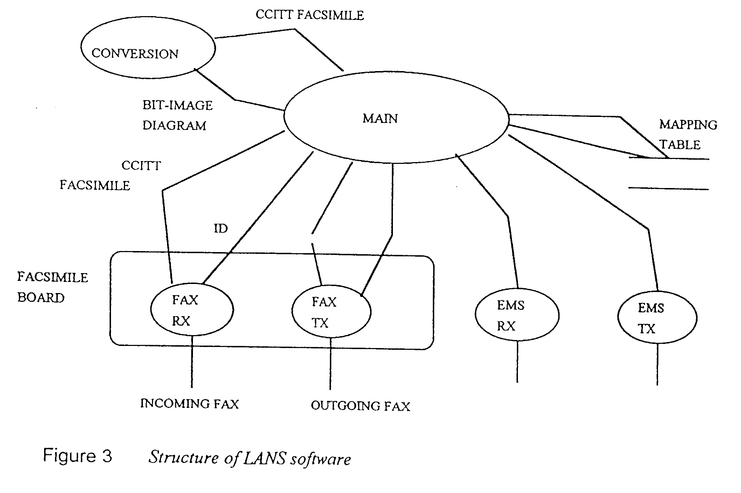

Figure 3 shows a structure of LANS software.

Explanations to the various abbreviations are: OF = Originating Facsimile, PSTN = Public Switched Telephone Network, FDS = Facsimile Delivery System, FB = Facsimile Board, LANS = Local Area Network Server, WS = Work Station, IR = Intended Recipient, LAN = Local Area Network.

The arrangement for providing means of identifying addressees of incoming facsimile messages relies on a so called store-and-forward principle. Facsimile messages (FM) are sent from the Originating Facsimile (OF) to the Facsimile Delivery System (FDS) which stores the messages in its memory. A Unique Telephone Number (UTN) per subscriber is used in the said transfer so as to facilitate a possibility for the originator to identify to whom the message is intended to. Thus the ones that have subscribed to the automatic facsimile delivery service have been allocated this number which they then can give to anyone for whom they are willing to give the possibility to send messages addressed to them individually.

An additional benefit when using this kind of arrangement of unique keys, and this comes clear especially in corporate environment, is that no longer is it necessary to use one single facsimile number in a company to which all facsimiles messages are received. Typical situation is that it is up to the secretarial staff to distribute the received messages to appropriate persons. This kind of an arrangement poses problems in terms of security due to the fact that it is difficult to make sure that no confidential information would leak to parties to whom it is not intended to. In fact, it can be said that for this reason any facsimile sent currently can be assumed to be essentially in public domain and this is an issue which slows down the increase in the use of facsimile services.

Sending facsimile messages to the Facsimile Delivery System (FDS) instead of forwarding them to Facsimile Board (FB) provides also a benefit in such a way that a so called never-busy-fax operation can be achieved. Because of the fact that the Facsimile Delivery System (FDS) has a number of telephone lines attached to it, it is very seldom the case that all of the lines were busy and thus people sending messages to the Facsimile Delivery System (FDS) will never encounter the destination facsimile busy situation. In the traditional approach, where facsimiles are sent directly to the Facsimile Board (FB), the situation is not as good at all. Instead, due to the fact that typically only one telephone line is provided to it, it occurs quite frequently that incoming facsimile machine is busy. This is an inconvenience to the user and may sometimes even lead to the message being left unsent altogether.

After having received and stored the Facsimile Message (FM) the Facsimile Delivery System (FDS) forwards the same Facsimile Message (FM) together with the Unique Telephone Number (UTN) to the Local Area Network Server (LANS). The Local Area Network Server (LANS) extracts the Telephone Number (TN) from the Facsimile Message (FM) and forwards the Facsimile Message (FM)to the Intended Recipient (IR) by means of an Electronic Mail System (EMS). At this stage it is also necessary to perform a mapping function which corresponds the extracted Unique Telephone Number (UTN) to the appropriate Local Area Network (LAN) addresses associated with the Intended Recipient (IR). The forwarded message might go through some conversion processes as the format as to how information needs to be presented in the particular local area network (LAN) installation may vary. The received facsimile could for example be translated to a bit image diagram which can be viewed by special software packages available in typical workstation environment.

Alternatively, instead of sending the facsimile across the switched telephone network, a direct connection to an electronic mail system could be utilized. The Facsimile Delivery System (FDS) could for example have a connection to public X.400 network thus making it possible to deliver facsimile messages directly to the Intended Recipient (IR). This approach would be beneficial from the point of view of reducing the traffic over the telephone lines connecting the Facsimile Delivery System to the switched telephone network. Also operating in the manner described makes also all the supplementary services attached to X.400 available and thus the level of service improves considerably.

When allowing all incoming facsimiles to the local area network go through the Facsimile Delivery System it is also possible to have a very strict control over the telephone line or lines that connect the Facsimile Board (FB) to the telephone network. This is due to the fact that at any point in time it is known by the Facsimile Delivery System (FDS) whether transmission to the particular Facsimile Board (FB) is in progress. Having this kind of knowledge available reduces the unsuccessful call attempts considerably as calls to the Facsimile Board (FB) never end up in a busy situation. This is of course assuming that no outgoing traffic is generated from the Facsimile Board (FB).

Referring to figures two and three an example of a normal operation is described as follows:
1. Facsimile is sent by the Originating Facsimile (OF). The telephone number used is 90-80478601 which subscriber Anne has given to people from whom she wants to receive facsimile messages from. The number routes the call to the Facsimile Delivery System (FDS) which receives and stores the facsimile into it's disk memory from where adequate amount of space is allocated. The received facsimile message is stored together with other possible facsimile messages for subscriber Anne in box 1. This mailbox also contains control information such as what is the ultimate telephone number where the facsimile is to be forwarded to. In this case the number 80478301 is stored in the mailbox control part and it is the number which reaches the appropriate Facsimile Board (FB) from where electronic mail messages reach her.
2. The Facsimile Delivery System (FDS) checks whether any facsimile transmissions are going on to number 80478301 and if not, then facsimile messages in Anne's mailbox are sent to that number. The number of 80478601 is inserted into the ID field of the facsimile to be transmitted. This ID field is normally devoted to have a textual description of the originating facsimile and it is defined in the relevant well established facsimile standards. When the facsimile transmission has been completed successfully then the message is removed from Anne's mailbox and the associated disk space is freed.
3. The FAX RX software module in the Facsimile Board (FB) receives the facsimile and sends information contained within to MAIN software module in Local Area Network Server (LANS). This information contains both the facsimile id and the actual facsimile data which makes up a picture.
4. The main module, after having received information relating to the facsimile message, check the MAPPING TABLE data structure to check whether number 80478601 in contained therein and when found corresponding local area network address is read. In this case it is 01/ANNE which in the particular local area network installation denotes user Anne that has been defined by the system administrator.
5. The MAIN software module within the Local Area Network Server (LANS) converts the facsimile message from format as it is received from Facsimile Board (FB) to a bit-image format using the services provided by CONVERT software module which is located in Local Area Network Server (LANS).
6. The converted facsimile message is sent to user Anne using Electronic Mail System (EMS). The address 01/ANNE is given as a destination address when the request is forwarded to the EMAIL TX software module which takes care of the actual transfer.

The main benefits using the scheme described above as compared to conventional arrangements, ie. sending facsimile directly, are:
1. It is possible to arrange automatic delivery of facsimiles to a specified workstation or user.
2. Confidentiality of received facsimile can be ensured so that only the one to whom the message is addressed can get access to it.
3. A number of telephone line connections to the Facsimile Delivery System (FDS) can be arranged and hence the congestion situations can be avoided almost completely whereas sending facsimiles directly to the destination machine leads very easily to a busy situation.

## Claims

1. A method for arranging deliveries of facsimile messages (FM) in a computer system, for example in local area network (LAN) environment, **characterized** in that facsimile messages can be forwarded automatically, without human intervention, by allocating Unique Telephone Numbers (UTN) to users and allowing Originating Facsimiles (OF) to send Facsimile Messages (FM) to Facsimile Delivery Systems (FDS) using the Unique Telephone Number (UTN) and allowing the Facsimile Delivery System (FDS) to forward the same message together with identification of the user to the Local Area Network Server (LANS) which, based on the user identification information, can further forward the message to the Intended Recipient (IR).
